# EUROPEAN PATENT APPLICATION

(11) **EP 3 243 671 A1**
(43) Date of publication of application: **15.11.2017**
(21) Application number: 16169179.5
(22) Date of filing: 11.05.2016
(51) Int. Cl.: B60C 11/24, B60C 23/04

(54) **METHOD AND APPARATUS FOR CLASSIFYING A TYRE**

(71) Applicant: Conti Temic Microelectronic GmbH, 90411 Nürnberg (DE); Continental Automotive GmbH, 30165 Hannover (DE); Continental Teves AG & Co. OHG, 60488 Frankfurt (DE)
(72) Inventor: Bopp, Thomas, 89129 Langenau (DE); Kagelari, Efi, Newhaven, BN9 9BW (GB); Khafagy, Heba, Chiswick, W4 4QF (GB); Kirstein, Stephan, 63110 Rodgau (DE); Rodriguez Ozcoz, Aida, Lewes, BN7 2FJ (GB); Sibiryakov, Alexander, Lewes, BN7 1DD (GB)

(57) **Abstract**

A classification of a tyre of a vehicle is provided. Image data of a tyre are captured by a camera. Predetermined features are identified in a captured image data relating to the tread of the tyre and based on the identified features the type of a tyre is classified.

In this way a classification of the tyre, in particular a classification into summer tyre or winter tyre can be achieved. This classification may be used in order to inform a driver of the vehicle or to use this information for a partial of fully automated driving.

## Description

The present invention relates to a method for classifying a tyre on a vehicle and an apparatus for classifying a tyre on a vehicle. Further, the present invention relates to an advanced driver assistance system and a traffic monitoring system comprising an apparatus for classifying a tyre.

### Prior art

Depending on weather conditions and/or road conditions, a vehicle may be equipped with different kinds of tyres. For instance, if the temperature is high, summer or normal tyres may be used. If the temperature is very low and snow or ice is expected on the road, winter tyres may be used.

Since winter tyres usually have a lower maximum speed limit than summer tyres, it might be useful to inform a driver of a vehicle which type of tyres is used. Further to this, it might be also helpful to inform the driver of the vehicle, if the type of tyres is not appropriate to the current weather or road condition, or the road is restricted to use of a particular type of tyres.

Accordingly, there is a need to inform a driver of a vehicle about the type of tyre which are mounted on the vehicle. In particular, there is a need for an automatic classification of the tyres mounted on a vehicle.

### Disclosure of the invention

The present invention provides a method for classifying a tyre on a vehicle according to the features of independent claim 1. Further, the present invention provides an apparatus for classifying a tyre on a vehicle according to the features of independent claim 8.

In particular, the present invention provides a method for classifying a tyre on a vehicle comprising the steps of capturing, by a camera, image data relating to a tread of a tyre; identifying predetermined features in the captured image data; and classifying a type of a tyre based on the identified features.

Further, the present invention provides an apparatus for classifying a tyre of a vehicle comprising a camera, an analysing unit and a classifying unit. The camera is adapted to capture an image of a tread of a tyre. Further, the camera is adapted to provide image data of the captured image. The analysing unit is adapted to identify predetermined features in the image data provided by the camera. The classifying unit is adapted to classify the type of a tyre based on the features identified by the analysing unit.

### Advantages of the invention

The present invention provides an automatic classification of a tyre on a vehicle. For this purpose, it is an idea of the present invention to perform an automated classification of a tyre based on optical data. Since modern vehicles usually comprise a plurality of cameras, image data of these cameras can be used for processing the image data in order to classify the tyres on a vehicle. In this way, a classification of a tyre can be achieved in a very efficient and simple manner. Image data of already existing systems can be applied to an additional computational process for classifying the tyres.

A further idea of the present invention is to identify the different types of tyres based on particular features which can be extracted from the image data relating to the tyres. In this way, a very fast and efficient classification of the tyres can be achieved.

Based on the determined classification of the tyres, the corresponding information can be provided to a driver. In this way, the driver can adapt his driving style to the current tyres. Hence, the security for driving a vehicle can be achieved.

Additionally or alternatively, the information relating to the classification of a tyre can be forwarded to further components for controlling the vehicle. In this way, the respective components may consider the type of the tyres on the vehicle in order to adapt the driving style automatically with respect to the tyres. For instance, acceleration or braking of the vehicle may be adapted based on the classification of the tyres. Further, it may be also possible to adapt the maximum speed based on the classification of the tyres. Further parameters which can be adapted based on the classification of the tyres are possible, too.

According to a further embodiment, the predetermined features which are identified in the captured image data relating to the tread of the tyre may comprise at least a tread pattern, a tread depth or wear marks of the tyre. Based on the tread pattern a very easy classification of the type of a tyre can be achieved. Since winter tyres usually have a larger tread depth than summer tyres, the classification of the tyre may be also based on the tread depth. The tread depth can be also used in order to generate a warning, if the tread depth is below minimum allowable tread depth. The image data may be also analysed with respect to wear marks of the tyre. If an abnormal wear mark of a tyre is detected, this can be an indication of an irregularity. Hence, the driver of the vehicle may be informed if detecting an abnormal or a predetermined kind of wear marks. Additionally, such an identification of a particular wear mark can be also forwarded to an advanced driver assistance system or another component such as an error memory of the vehicle.

According to a further embodiment, the tyres may be classified at least into winter tyres, summer tyres and/or all-weather tyres. Such a classification of the tyres may be appropriate for considering particular road situations or weather situations. Further, this classification of tyres may also correspond, for instance, to particular speed limits for each kind of tyre.

According to a further embodiment, classifying the tyre comprises detecting a flat tyre. In this way, a pressure drop can be detected in a very simple and easy way without any need of complex additional hardware. Hence, a puncture of a tyre can be detected and a corresponding notification can be provided to a driver.

According to a further embodiment, the method may comprise a step of detecting an environmental feature. Further, the method may comprise a step for verifying whether the classified type of a tyre satisfies the detected environmental feature. By matching the environmental features with the classification of the tyre, the security can be improved. In particular, a driver can be informed, if the present tyres are not appropriate for the detected environmental features.

According to a particular embodiment, the environmental features may comprise a traffic sign, a weather condition, a road condition and/or a location. For instance, it may be verified whether a traffic sign is detected which requires a particular type of tyre. Further, the classification of the tyres may be also matched with whether conditions, for instance a detection of snow, ice, rain etc. in order to generate a warning if the current tyres are not appropriate for a weather condition. Accordingly, the type of a tyre may be also matched with the detection of a particular situation of the road. The weather condition or the situation of the road may be detected by sensors, for instance, a sensor for detecting a temperature. Additionally or alternatively, the respective information relating to the weather condition or the road situation may be also received, for instance, via a wireless communication. Further, it may be also possible to match the type of a tyre with a particular date or a time period. For instance, winter tyres may be recommended between October and April and summer tyres may be recommended between May and September. However, any other parameter for recommending a particular type of a tyre may be possible, too.

According to an embodiment, image data relating to the tread of the tyre are captured, if the tyre has a predetermined steering. For instance, the tread of the tyre can be captured if the front tyres are inclined.

According to a further embodiment, the camera of the apparatus for classifying the tyre of a vehicle is adapted to capture the image of the tread of the tyre, if the tyre has a predetermined steering and/or the speed of the vehicle is less than a predetermined threshold value.

According to still a further aspect, the present invention provides an advanced driver assistance system (ADAS) comprising an apparatus for classifying a tyre of a vehicle.

According to a further embodiment, the advanced driver assistance system further comprises a detecting unit and a verifying unit. The detection unit is adapted to detect an environmental feature. The verifying unit is adapted to verify weather the classified tyre satisfies the detected environmental feature.

According to a further aspect, the advanced driver assistance system is adapted to determine a maximum speed based on the classification of the tyre.

According to a further aspect, the present invention provides a traffic monitoring system comprising an apparatus for classifying a tyre of a vehicle according to the present invention.

Further advantages and embodiments will be apparent based on the following description of the embodiments which are described in connection with the accompanying drawings.

### Brief description of the drawings

Figure 1 illustrates a schematic drawing of a vehicle with an apparatus for classifying a tyre according to an embodiment;
Figure 2 illustrates a top view of a vehicle with an apparatus for classifying a tyre according to an embodiment; and
Figure 3 illustrates a flowchart of a method for classifying a tyre according to an embodiment.

### Description of embodiments

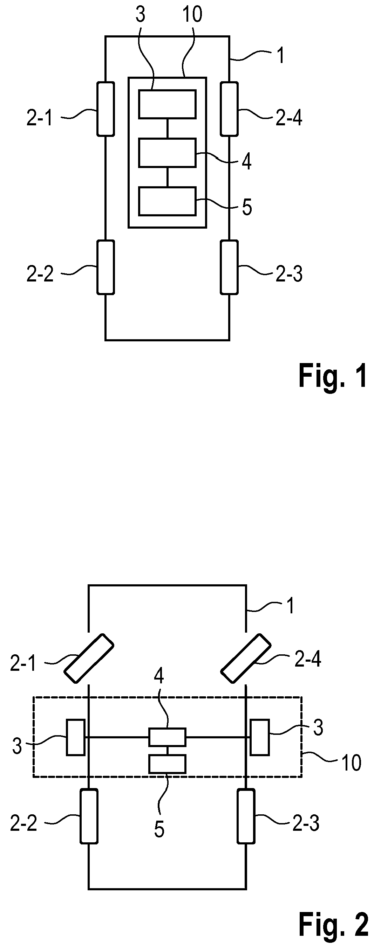

Figure 1 illustrates a schematic drawing of a vehicle comprising an apparatus 10 for classifying a tyre 2-i of a vehicle 1. As can be seen in this figure, the vehicle 1 is equipped with a plurality of the tyres 2-i. For instance, the tyres 2-i may be summer tyres, winter tyres or all-whether tyres. However, the present invention is not limited to these types of tyres. Any other types of tyres are possible, too. The apparatus 10 for classifying the tyres 2-i of the vehicle 1 may comprise a camera 3, an analysing unit 4 and a classifying unit 5. The camera 3 may be any type of camera which is adapted to capture an image of at least one tyre 2-i of the vehicle 1. In particular, camera 3 may capture an image of a tread of the tyre 2-i. For instance, camera 3 may be a camera of an advanced driver assistance system of the vehicle 1. Camera 3 may capture image data in a visible light spectrum. However, it is also possible that camera 3 may capture image data of the tyre 2-i in an invisible light spectrum, for instance infrared or ultraviolet. For example, camera 3 may be a camera which is mounted on a side of a vehicle 1. Camera 3 may have an opening angle of approximately 180 degrees. However, any other position of camera 3 and/or any other opening angle of camera 3 may be possible, too.

If it is assumed that all tyres 2-i on vehicle 1 may be of the same type, it is sufficient to capture image data of only one tyre 2-i. However, it is also possible to analyse image data of more than one tyre. For instance, it is possible to analyse the image data of the front tyres or the rear tyres, the tyres on the left side and/or the right side, for even all (four) tyres 2-I of vehicle 1.

Camera 3 captures image data of at least one tyre 2-i and provides image data of the captured image relating to at least one tyre 2-i. The provided image data are analyzed by an analysing unit 4. In particular, analysing unit 4 identifies predetermined features in the provided image data. For instance, analysing unit 4 may identify a particular tread pattern. For instance, a plurality of a predetermined tread patterns may be stored in a memory of analysing unit 4 or another memory, and analysing unit 4 matches the stored tread patterns with the image data provided by camera 3 in order to identify a corresponding tread pattern. However, any other algorithm for identifying a predetermined tread pattern may be possible, too. Analysing unit 4 may be also adapted to determine the tread depth of a tyre 2-i based on the image data provided by a camera 3. For this purpose, any appropriate algorithm for determining the tread depth of the tyre may be applied. Further, analysing unit 4 may analyse the image data in order to identify wear marks of the tyre. For instance, analysing unit 4 may detect an unbalanced usage of a tyre.

Based on the identified features of analysing unit 4, classifying unit 5 may perform a classification of the tyre. For instance, a tyre may be classified as a winter tyre, a summer tyre or an all-weather tyre based on detected tread pattern. Further, it may be also possible to classify a tyre based on the determined tread depth. For instance, a tyre may be classified as a winter tyre if the tread depth is larger than a predetermined threshold, and the tyre may be classified as a summer tyre if the tread depth is below a predetermined threshold. Further, it may be also possible to detect that the currently used tyre is a smooth tyre, if the detected tread depth is below a predetermined minimum tread depth value. In addition, a further classification may be also performed based on wear marks. For instance, a failure in the setting of the vehicle may be detected if an unbalanced wear mark is detected on a tyre. Additionally or alternatively, the image data relating to a tyre 2-i may be analysed in order to determine an estimation of a pressure in the respective tyre. In particular, the image data relating to a tyre 2-i can be analysed to identify a feature indicating an abnormal pressure, e.g. a loss of tyre pressure.

The classification of a tyre which is determined by classifying unit 5 may be provided to a driver in order to give the driver of the vehicle an indication about the tyres of the vehicle. In this way, the driver is aware of the currently used tyres without any further activity.

Optionally, it is possible to analyse the image data of a tyre in order to detect a pressure drop of the corresponding tyre. In this way, a flat tyre can be detected and a warning can be generated. For instance, a warning can be provided to the driver in order to indicate an abnormality of the tyre.

Alternatively or additionally, the information relating to the classification of the tyre may be also used for a further processing, in particular for an analysis by an advanced driver assistance system of the vehicle 1. For instance, a maximum speed of the vehicle 1 may be set in accordance with the classification of the tyres 2-i. For example, a higher speed limit may be set if a summer tyre is detected and a lower speed limit may be set if a winter tyre is detected.

Further, the classification of the tyre 2-i may be matched with further parameters. For instance, environmental parameters may be determined and the classification of the tyre 2-i may be matched with these environmental parameters. For instance, a weather condition such as a temperature or rain or snow fall may be taken into account in combination with the determined classification of tyre 2-i. Further road conditions and/or weather conditions may be taken into account, too. The weather conditions and/or the road conditions may be determined, for instance, by additional sensors of the vehicle 1. For instance, further information regarding the weather conditions and/or the road conditions may be provided by an advanced driver assistance system. Additionally or alternatively, such information relating to the weather conditions and/or the road conditions may be also received from an external server, for instance, via a wireless communication channel.

It is also possible to match the classification of the tyre with a particular location. Such a location may be obtained, for instance via a navigation system, a further component of an advanced driver assistance system or a global positioning system receiver. For instance, it may be possible that for a particular location or a particular area a particular type of a tyre is required. Accordingly, a warning may be generated, if the currently used tyre does not correspond to a type of tyre which is required for the respective area.

Further, the currently used type of a tyre may be also matched with further information of an advanced driver assistance system. For instance, an advanced driver assistance system, or any other system of vehicle 1, may analyse traffic signs, etc. in order to detect particular requirement for a special type of a tyre. For instance, a traffic sign may require a winter tyre. Accordingly, a driver may be informed if the currently used type of a tyre 2-i does not correspond to the requirements of a traffic sign.

Figure 2 shows a top view of a vehicle 1 comprising an apparatus 10 for classifying a tyre 2-i.

As can be seen in this figure, it may be difficult for a camera 3 on a side of a vehicle 1 to capture a tread of a tire 2-i. In particular, only a small part of the rear tyres 2-2 and 2-3 can be captured by side cameras 3. However, if the front tyres 2-1 and 2-4 are inclined, a larger part of these front tyres 2-1 and 2-4 can be captured by cameras 3. Hence, capturing of the image data of the tyre 2-i may be performed if the steering of the front tyres 2-1 and 2-4 is larger than a predetermined steering. Further, the capturing of the image data for capturing the tread of the tyres 2-i may be also limited to a particular speed of the vehicle 1. In particular, image data for analysing the type of a tyre may be captured only if the speed of the vehicle 1 is less than a predetermined threshold value or the vehicle 1 stands still.

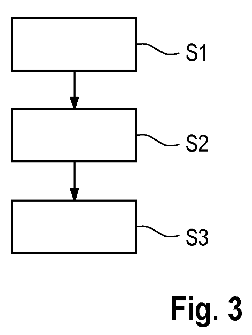

Figure 3 shows a schematic drawing of a flowchart according to a method for classifying a tyre 2-i on a vehicle 1. The method comprises a step S1 for capturing image data relating to tread of a tyre 2-1. The image data may be captured by a camera 3. In step S2 predetermined features are identified in the captured image data. In step S3, the type of a tyre 2-i is classified based on the identified features.

Summarizing, the present invention provides a classification of a tyre of a vehicle. For this purpose, image data of a tyre are captured by a camera. In order to classify the tyre, predetermined features are identified in a captured image data relating to the tread of the tyre and based on these identified features the type of a tyre is classified. In this way a classification of the tyre, in particular a classification into summer tyre or winter tyre can be achieved. This classification may be used in order to inform a driver of the vehicle or to use this information for a partial of fully automated driving.

## Claims

1. A method for classifying a tyre (2-i) on a vehicle (1), comprising the steps:
capturing (S1), by a camera (3), image data relating to a tread of the tyre (2-i);
identifying (S2) predefined features in the captures image data; and
classifying (S3) the tyre (2-i) based on the identified feature.

2. The method according to claim 1, wherein the predetermined features comprise at least a tread pattern, tread depth and/or or wear marks of the tyre (2-i).

3. The method according to claim 1 or 2, wherein the tyres are classified at least into winter tyres or summer tyres.

4. The method according to any of claim 1 to 3, wherein the method further comprises the steps of:
detecting an environmental feature; and
verifying whether the classified tyre (2-i) satisfies the detected environmental feature.

5. The method according to claim 4, wherein the environmental feature comprises a traffic sign, a weather condition, a road condition and/or a location.

6. The method according to any of claim 1 to 5, wherein the image data relating to the tread of the tyre (2-i) are captured if the tyre (2-i) has a predetermined steering.

7. The method according to any of claim 1 to 6, wherein classifying (S3) the tyre (2-i) comprises detecting a flat tyre.

8. An apparatus (10) for classifying a tyre (2-i) of a vehicle (1), comprising:
a camera (3), adapted to capture an image of a tread of a tyre (2-i), and provide image data of the captured image;
an analysing unit (4), adapted to identify predetermined features in the image data provided by the camera (3);
a classifying unit (5), adapted to classify the tyre (2-i) based on the features identified by the analysing unit (4).

9. The apparatus (10) according to claim 8, wherein the camera (3) is adapted to capture the image of the tread of the tyre (2-i) if the tyre (2-i) has a predetermined steering and/or a speed of the vehicle (1) is less than a predetermined threshold value.

10. An advanced driver assistance system, comprising an apparatus (10) for classifying a tyre (2-i) of a vehicle (1) according to claim 8 or 9.

11. The advanced driver assistance system according to claim 10, further comprising a detecting unit, adapted to detect an environmental feature; and
a verifying unit, adapted to verify whether the classified tyre (2-i) satisfies the detected environmental feature.

12. The advanced driver assistance system according to claim 10 or 11, wherein the advanced driver assistance system is further adapted to determine a maximum speed based on the classification of the tyre (2-i).

13. A traffic monitoring system comprising an apparatus (10) for classifying a tyre (2-i) of a vehicle (1) according to claim 8 or 9.
